# EUROPEAN PATENT APPLICATION

(11) **EP 2 073 095 A2**
(43) Date of publication of application: **24.06.2009**
(21) Application number: 08021865.4
(22) Date of filing: 17.12.2008
(51) Int. Cl.: G06F 1/28

(54) **Measurement device and monitoring system for processing units**

(30) Priority: 20.12.2007 US 8492 P
(71) Applicant: Koninklijke KPN N.V., 2516 CK The Hague (NL)
(72) Inventor: van Veen, Ronald, 3831 HB Leusden (DE)
(74) Representative: Wuyts, Koenraad Maria

(57) **Abstract**

The invention relates to a measurement device configured for measuring and reporting electrical measurement data. The electrical measurement data comprises a dc voltage supplied to a processing unit and a dc current running in consequence of the supplied dc voltage. The measurement device comprises a first terminal and a second terminal, wherein the device is configured for measuring the dc voltage of the processing unit. The same terminals are also used for power supply for the measurement device. A third and a fourth terminal of the measurement device are provided, wherein the device is configured for directly measuring the dc current of the processing unit using these third and fourth terminals. The measured dc voltage and dc current are wirelessly transmitted, using a transmitter, to a data processing system.

## Description

### FIELD OF THE INVENTION

The invention relates to the field of measurement devices and monitoring systems of processing units. More specifically, the invention relates to measuring and reporting electrical measurement data of one or more processing units to a data processing system. The invention also relates to a processing system and to a method of measuring and reporting electrical measurement data.

### BACKGROUND OF THE INVENTION

Telecommunication centres and computer data centres include numerous racks of processing units including processors, memory and other resources to provide telecommunication and data services, respectively.

A part of these (racks of) processing units is supplied with a voltage of 48 V dc by means of cables or bus bars, as a result of which a dc current is supplied to these processing units. This power supply allows the processing units to run applications, and provide other functionality.

The continuous availability of these processing units is critical and any (capacity) problems should be apparent at a time that measures can be taken to avoid malfunctioning or fall-out.

There is a need in the art for easy and (cost-) effective measurement of the supplied dc voltage and dc current to a processing unit, a rack of processing units and/or a group of racks within e.g. a closed space.

### SUMMARY OF THE INVENTION

A measurement device configured for measuring and reporting electrical measurement data is disclosed. The electrical measurement data comprises a dc voltage supplied to a processing unit and a dc current running in consequence of the supplied dc voltage. The measurement device comprises a first terminal and a second terminal, wherein the device is configured for measuring the dc voltage of the processing unit. The same terminals are also used for power supply for the measurement device. A third and a fourth terminal of the measurement device are provided, wherein the device is configured for directly measuring the dc current of the processing unit using these third and fourth terminals. The measured dc voltage and dc current are wirelessly transmitted, using a transmitter, to a data processing system.

A monitoring system is also disclosed comprising one or more of such measurement devices and a data processing system configured for wirelessly receiving and processing the wirelessly transmitted measured dc voltage and dc current data.

Furthermore, a method of measuring and reporting electrical measurement data using a measurement device is disclosed. The electrical measurement data comprise a dc voltage supplied to a processing unit and a dc current running in consequence of the supplied dc voltage. Power is supplied for the measurement device using a first terminal and a second terminal. The same terminals are used for measuring the dc voltage supplied to the processing unit using the first and second terminal. The dc current is directly measured using a third and fourth terminal of the measurement device. The measured dc voltage and dc current are wirelessly transmitted to a data processing system.

The single-piece measurement device is easily installed by connecting the first to fourth terminals enabling powering of the device, real-time measurement of DC power supply operating conditions of the processing unit(s) and transmission of these parameters to a data processing system without requiring further power or amplification of signals. Since the measurement device is powered by the supply voltage of the processing unit(s), using the first and second terminals, the measurement device is able to measure as long as the processing unit is powered. The third and fourth terminals can be connected to a shunt resistance in the supply path of the processing units to allow direct measurement of the dc current.

The monitoring system enables data collection of large amounts of measurement devices in combination with effective administration of these data. The data processing system may be used for alerting and/or control purposes.

It should be appreciated that a processing unit may be a processing module, a rack (i.e. a support frame) of processing modules or a (closed) space containing a plurality of processing modules or racks of processing modules. The data processing system may comprise an externally provided data processing system (a server), but may also comprise another measurement device.

The embodiments of the invention as defined in claims 2 and 12 provides the advantage that only one of the measurement devices should be configured for transmitting electrical measurement data to the data processing system, whereas other measurement device should only be configured for transmitting the measured data to a (neighbouring) measurement device, using e.g. an Ethernet connection. This saves costs and resources for transmitting the data.

The embodiment of the invention as defined in claim 3 enables a single measurement device to be used for measuring dc voltage and dc current of multiple processing units by providing multiple channels for directly measuring the dc current.

The embodiments of the invention as defined in claims 4 and 13 enable a real-time continuous determination of power consumption by one or more processing units on the basis of which power consumption can be accurately assigned to a processing unit of a customer, thereby allowing e.g. fair cost calculation.

The embodiments of claims 5, 6, 9 and 14 disclose use of a shunt resistance, provided externally of the measurement device, for directly measuring the dc current. Such a shunt resistance is often available in a support frame for supporting (housing) the processing units and is in close proximity of the rails (also provided in the support frame) for supplying the dc voltage. The measurement device comprises a calibration means for taking account of (slightly) different values of shunt resistances.

The embodiment of claim 7 avoids transmission conflicts of the electrical measurement data for a monitoring system comprising large amounts of measuring devices.

The embodiments of claims 10 and 15 provide examples of using the central data processing system for taking action in accordance with measured dc voltage and current of (groups of) processing units.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 is a schematic illustration of a monitoring system according to an embodiment of the invention;
FIG. 2 is a schematic illustration of a closed space of a data communication centre comprising a plurality of support frames housing processing units;
FIG. 3 is a schematic illustration of a support rack comprising a processing unit and a measurement device according to an embodiment of the invention; and
FIGS. 4A-4C are block diagrams of (components of) the monitoring system and measurement device according to an embodiment of the invention.

### DETAILED DESCRIPTION OF THE DRAWINGS

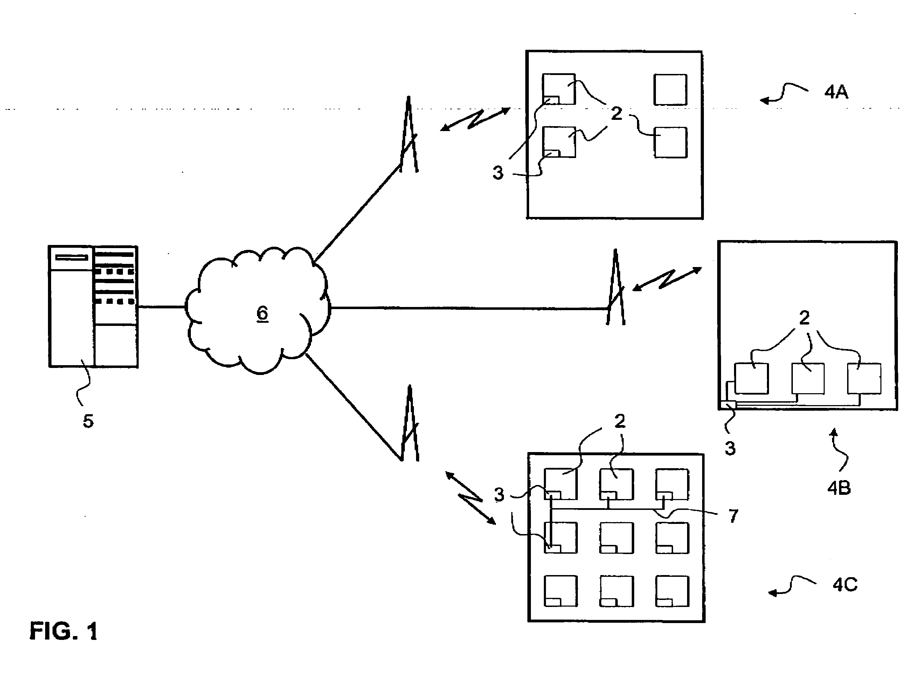

FIG. 1 is a schematic illustration of a monitoring system 1 according to an embodiment of the present invention. The system comprises a plurality of dc voltage (48V) supplied processing units 2 each comprising measurement device 3 for measuring the dc voltage and resulting dc current for the modules 2. Each of the modules 2 is provided in a centre 4A, 4B, 4C, e.g. a data centre or a telecommunications centre 3, for providing data services and telecommunication services respectively. Centre 4A also comprises processing modules 2 not provided with measurement devices 3. In centre 4B, a single measurement device 3 is installed for measuring dc voltage and current of a plurality of processing modules, i.e. centre 4B itself is the processing unit.

Modules 2 are configured for wirelessly transmitting the measured dc voltage and dc current for each of the modules 2 to a data processing system 5 over a (partially) wireless network 6. Data processing system 5 is configured for automatically requesting the electrical measurement data from the respective measurement devices 3, e.g. every 15 minutes. Data processing centre may e.g. use SNMP version 1 GET commands. Typically, measurements are not stored locally on the measurement devices 3 and the response to the GET request is the recently measured value of the dc voltage and current. Each measurement device 3 is addressed using a separate IP address or UDP port. The measurement devices 3 can form either a SSH-VPN or a L2TP VPN tunnel to a remote VPN concentrator for secure communication and network address space tunnelling.

As shown for centre 4C in FIG. 1, measurement devices 3 may be chained together using e.g. (wireless) Ethernet 7, such that only one of the measurement device is equipped with a GPRS module for transmitting the measurement results of each of the connected devices 3 to the data processing system 5. Measurement device 3 may also be used as a gateway to network 6 for providing further data of other devices to the data processing system 5 or another external system.

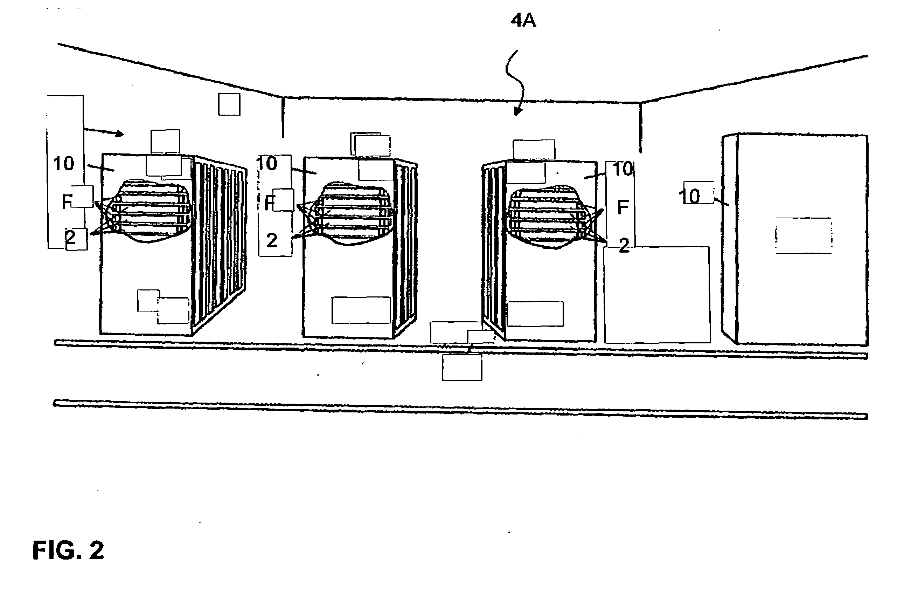

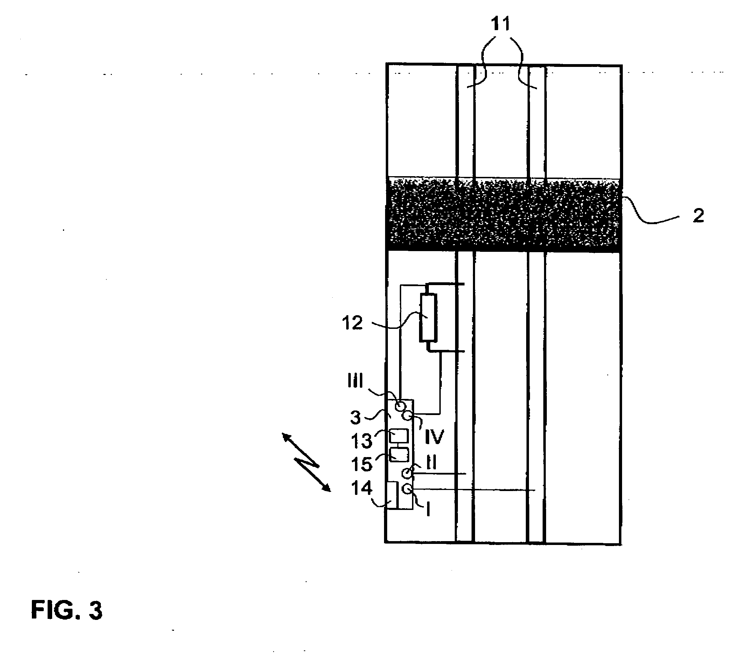

FIG. 2 is a schematic illustration of centre 4A housing a plurality of racks 10 (support frames) containing a plurality of processing units 2 cooled using fans F. Centre 4 is e.g. a telecommunications centre or a data centre. Each of the racks 10 comprises a measurement device 3 as shown in more detail in FIG. 3.

FIG. 3 is a is a schematic illustration of a support rack 10 comprising a processing unit 2 and a measurement device 3 according to an embodiment of the invention.

Support rack 10 comprises voltage supply rails 11 for supplying 48V dc to the processing unit 2 and a shunt resistance 12. It should be noted that the position of shunt resistance 12 in the support rack 10 is chosen for reasons of clarity. Shunt resistance 12 may be provided at any position within the support rack 10, particularly also in a position behind the processing unit 2 to be available for the connection of the processing unit 2 as well.

Measurement device 3 comprises first and second terminals I, II and third and fourth terminals III, IV. Measurement device 3 can be easily installed by placing the device within the rack 10 and connecting terminals I and II to voltage supply rails 11 and connecting terminals III and IV to shunt resistance 12 such that dc current running through the rails 11 can be measured. Measurement device 3 is arranged for being powered and performing dc voltage measurements using terminals I and II.

The measurement device 3 may comprise multiple terminals I, II and III, IV. In an embodiment, measurement device 3 comprises 20 terminals III, IV and 10 terminals I, II for measuring dc current, respectively dc voltage of ten processing units 2.

In an embodiment, measurement device 3 may have the following specifications:
- eight analogue inputs for 0-10 mV or 0-60 mV nominal range (see table 1)
- two analogue inputs for -10-10 mV or -60-60 mV nominal range (see table 2)
- one analogue input for 0-60V nominal range;
- 2 digital inputs (see table 4)
- 48 Vdc nominal power supply voltage
The power supply is isolated and operates with input voltages in the range of 36-75 V dc.
- two Ethernet ports (hub style)
The measurement devices have two 10/100 Mbits/sec Ethernet interfaces that are connected with an internal hub. This reduces cabling when connecting multiple measurement devices 3.
- GPRS/EDGE communication means
- DIN rail mounting
- two isolated DC inputs (12V) or two non-isolated DC outputs (jumper selection)
- two isolated GND or two non-isolated GND outputs (jumper selection)

In order to process analogue inputs for positive current shunts, the following specifications may be used. The terminals III and IV inputs measure the voltage caused by current flowing through the external shunt resistor 12. The 0-10 mV voltage is produced by a current in the range of 0-1000 A and 0-60 mV voltage is produced by a current of 0-250A or 0-600A. Terminals III and IV are galvanically isolated from each other. Pre-filtering is applied to filter out noise. Additional measurement ranges can be used for 0-10 mV, 1200A and 0-10 mV, 2000A.

Table 1 provides an overview of an embodiment of the measurement device 3.

**TABLE 1**

| **Item** | **Value** | **Further information** |
|---|---|---|
| Amount of inputs | 8 | |
| Isolation | Galvanic 2kV | |
| Input range | 0-75 mV dc | If input >75mV, the reported value is 75 mV, but "clamping flag" is set |
| Resolution | 16 bit | 16 bit > 0,4A minimum resolution for 0-10mV, 2000A |
| Accuracy: | 2% | |
| Gain adjust | 5% | To calibrate shunt precision variances |
| Filtering | Low pass 10 Hz | |
| Protection | Overcurrent, over-voltage, ESD, reverse polarity | |

The measurement device 3 may be required to process analogue inputs for bidirectional current shunts, the current direction being dependent of whether a battery is charged or used. The terminals III and IV inputs measure the voltage caused by current flowing through the external shunt resistor 12. The - 10-10 mV voltage is produced by a current in the range of -1000-1000 A and -60-60 mV voltage is produced by a,current of -250-250A or -600-600A. Terminals III and IV are galvanically isolated from each other. Pre-filtering is applied to filter out noise.

Table 2 provides an overview of an embodiment of the measurement device 3.

**TABLE 2**

| **Item** | **Value** | **Further information** |
|---|---|---|
| Amount of inputs | 2 | |
| Isolation | Galvanic 2kV | |
| Input range | -75-75 mV dc | If input >75mV, the reported value is 75 mV, but "clamping flag" is set |
| Resolution | 16 bit | 16 bit > 0,4A minimum resolution for-10-10mV, 1000A |
| Accuracy | 2% | |
| Gain adjust | 5% | To calibrate shunt precision variances |
| Filtering | Low pass 10 Hz | |
| Protection | Overcurrent, over-voltage, ESD | |

Terminals I and II measure the dc voltage and are used to power measurement device 3. Table 3 provides an overview of the specifications.

**TABLE 3**

| **Item** | **Value** | **Further information** |
|---|---|---|
| Amount of inputs | 1 | |
| Isolation | Galvanic 2kV | |
| Input range | 0-65 Vdc | If input >65V, the reported value is 65 V, but "clamping flag" is set |
| Resolution | 16 bit | |
| Accuracy | 2% | |
| Gain adjust | Not required | |
| Filtering | Low pass 10 Hz | |
| Protection | Overcurrent, over-voltage, ESD, reverse polarity | |

Digital inputs are used to detect the status of alarm signals. Each digital input has DC and GND outputs to supply circuits. The DC and GND must be selectable with internal jumpers to be either incoming VCC and GND (before isolation) or isolated 12 Vdc and isolated GND. Tabel 4 provides specifications:

**TABLE 4**

| **Item** | **Value** | **Further information** |
|---|---|---|
| Amount of inputs | 2 | |
| Isolation | Galvanic 2kV | |
| Input range | 0- +/- 65 Vdc | Bipolar polarity |
| High state voltage | >= 5V | Higher voltages are detected as a logical "1" |
| Low state voltage | <= 3V | Lower voltages are detected as a logical "0" |
| Filtering | Glitch and switching vibration filtering | |
| Protection | Overcurrent, over-voltage, ESD | |

Measurement device 3 also comprises a processor 13, a transmitter 14 for wirelessly transmitting the operating data and, possibly, a memory 15. Measurement of the dc voltage and dc current are performed every 10 ms.

Processor 13 may be configured to also calculate the momentary power consumption and the total power consumption of a processing unit 2. The momentary power consumption and/or the total power consumption may also be transmitted wirelessly to data processing system 5.

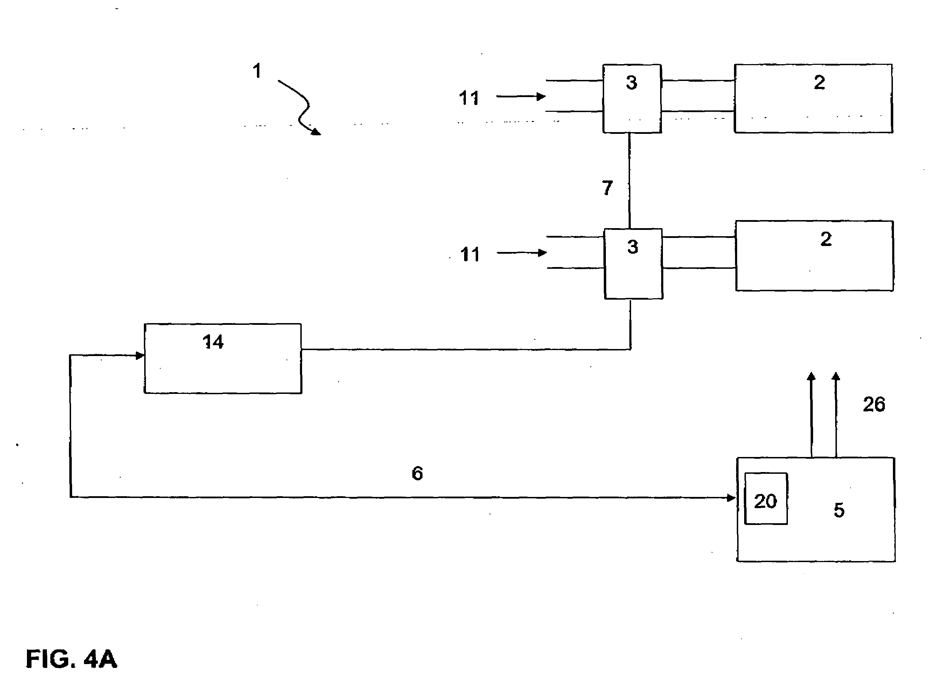

FIGS. 4A-4C provide block diagrams of monitoring system 1 and measuring devices 3 for measuring operating data of processing units 2, wherein identical reference numerals have been used as in the preceding figures for indicating similar components. As mentioned previously, it should be understood that a single measurement device 3 may be used to obtain measurement data of multiple processing units 2.

In FIG. 4A, two connected measurement devices 3 are shown, each measuring operating data of respective processing units 2. Connection between measurement devices 3 is obtained using network 7. One of the measurement devices 3 functions as a hub and communicates the operating data of both measurement devices 3 to data processing system 5, using transmitter 14 and network 6, upon request of a requester 20 of data processing system 5.: As an example, requester 20 may automatically request the operating data of measurement devices periodically, e.g. every few minutes, e.g. every 15 minutes. Intermediate requests may be performed manually.

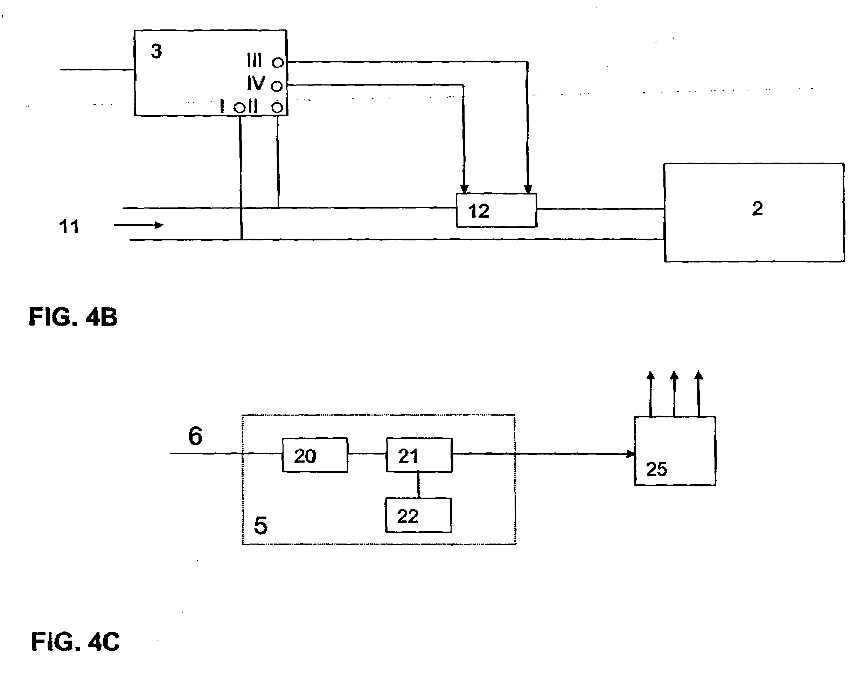

FIG. 4B shows a block diagram of a measurement device 3 using shunt resistance 12 to measure a value of the dc current of measurement device 3 using terminals III and IV, while measuring and being powered over terminals I, II.

Finally, FIG. 4C is a block diagram of data processing system 5 comprising requester 20, a processor 21 for processing measurement data and database 22 for storing measurement data and other data, such as alarming and control thresholds.

The database 22 is a SQL database using linux script. The script reads IP addresses of the measurement devices 3 from a file or a database and acquires the operating data periodically. The period is user defined (e.g. 15 or 30 minutes). The script can also be executed on request by using a shell prompt or HTTP request or another remote procedure call method. The analogue input data is stored in database 22 as raw A/D conversion reading and scaling may be done on the user interface. The database 22 contains the following data:
- host name of the measurement device 3 (e.g. a location code of the device)
- ip address
- time of measurement
- result of data communication (ok, failed)
- reason of measurement (periodic, requested)
- positive current measurement value
- positive current measurement value clamp state
- bidirectional current measurement value
- bidirectional current measurement clamp state
- voltage measurement value
- voltage measurement clamp state
- digital input value

Data processing system 5 is configured for communicating with a controller 25 to control administrative actions, alarming actions and or control actions for controlling processing units 2 and/or their environment. Particularly advantageous applications include using the measurement data to determine rack positions for placement of further processing units/modules 2, to calculate energy costs for (groups of) processing units to provide fair cost attribution to customers, to generate alarm signals if a predetermined threshold is passed and/or to control cooling of the processing units 2.

## Claims

1. A measurement device configured for measuring and reporting electrical measurement data, said electrical measurement data comprising a dc voltage supplied to a processing unit and a dc current running in consequence of said supplied dc voltage, the measurement device comprising:
- a first terminal and a second terminal, said device being configured for measuring said dc voltage of said processing unit and for powering said measurement device using said first and second terminal;
- a third and a fourth terminal, said device being configured for directly measuring said dc current of said processing unit using said third and fourth terminal;
- a wireless transmitter configured for wirelessly transmitting said measured dc voltage and dc current to a data processing system.

2. The measurement device according to claim 1, wherein said measurement device comprises a receiver, said measurement device being configured for receiving a further measured dc voltage and a further dc current of a further electrical processing unit from a further measurement device via said receiver and for transmitting said further dc voltage and further dc current to said data processing system.

3. The measurement device according to claim 1 or 2, wherein said measurement device comprises multiple third and fourth terminals for measuring further dc currents of further processing units.

4. The measurement device according to one or more of the preceding claims, wherein said device is further configured for calculating a power consumption of said processing unit using said measured dc voltage and dc current and transmitting said calculated power consumption to said data processing system.

5. The measurement device according to one or more of the preceding claims, wherein said third and fourth terminals measure said dc current of said processing unit using a shunt resistance and wherein said measurement device is configured for calibrating said shunt resistance.

6. A processing system comprising the measurement device according to one or more of the preceding claims and one or more processing units and a support frame arranged for supporting said processing units, wherein said a support frame comprises dc voltage supply rails for supplying said dc voltage to said processing units and wherein said first and second terminals of said measurement device are connected to said dc voltage supply rails for measuring said dc voltage of said processing units and for powering said measurement device and wherein said support frame comprises one or more shunt resistances, said third and fourth terminal being connected over said shunt resistance for measuring said dc current of said processing unit.

7. A monitoring system comprising:
- one or more measurement devices according to one or more of the preceding claims, said measurement devices being configured to measure said dc voltage and dc current of one or more processing units;
- a data processing system configured for wirelessly receiving and processing said wirelessly transmitted measured dc voltage and dc current data.

8. The monitoring system according to claim 7, said system further comprising a requesting module for requesting said electrical measurement data from said measurement devices.

9. The monitoring system according to claim 7 or 8, wherein said processing units are part of the processing system according to claim 6.

10. The monitoring system according to one or more of the claims 7-9, wherein said data processing system is configured for triggering at least one of:
- an alarm signal in an alerting system;
- a control signal in a control system;
- an administrative action in an administrative system; and wherein said control system is configured for controlling, by said control signal, at least one of said processing unit and a cooling unit, configured for cooling said processing unit, in accordance with at least one of said measured dc voltage, said measured dc current and a calculated momentary power consumption of said processing unit using said measured dc voltage and dc current.

11. A method of measuring and reporting electrical measurement data using a measurement device, said electrical measurement data comprising a dc voltage supplied to a processing unit and a dc current running in consequence of said supplied dc voltage, the method comprising;
- supplying power for said measurement device using a first terminal and a second terminal of said measurement device;
- measuring said dc voltage of said processing unit using said first and second terminal;
- directly measuring said dc current of said processing unit, using a third and a fourth terminal of said measurement device;
- wirelessly transmitting said measured dc voltage and dc current to a data processing system.

12. The method according to claim 11, further comprising the steps of:
- receiving a further measured dc voltage and a further dc current of a further electrical processing unit from a further measurement device;
- transmitting said further dc voltage and further dc current to said data processing system.

13. The method according to claim 11 or 12, further comprising the steps of:
- calculating a power consumption of said processing unit using said measured dc voltage and dc current;
- transmitting said calculated power consumption to said data processing system.

14. The method according to one or more of the claims 11-13, further comprising the step of directly measuring said dc current by using a shunt resistance of a support frame supporting said processing unit.

15. A method of providing at least one of an alarm signal, a control signal or an administrative action as defined in claim 10 using a monitoring system according to one or more of the claims 7-9.
